Europäisches Patentamt

European Patent Office

Office européen des brevets

(11) Numéro de publication: **0 161 181**
**A1**

## DEMANDE DE BREVET EUROPEEN

(21) Numéro de dépôt: 85400758.0

(22) Date de dépôt: 16.04.85

(51) Int. Cl.⁴: **G 07 F 7/08**
**G 07 D 7/00**

(30) Priorité: 19.04.84 FR 8406221

(43) Date de publication de la demande:
13.11.85 Bulletin 85/46

(84) Etats contractants désignés:
CH DE GB IT LI LU

(71) Demandeur: SOCIETE D'ELECTRONIQUE DE LA REGION
PAYS de LOIRE - SEREL
74, rue du Surmelin
F-75020 Paris(FR)

(72) Inventeur: Guerri Dall'Oro, Guido
THOMSON-CSF SCPI 173, bld Haussmann
F-75379 Paris Cedex 08(FR)

(74) Mandataire: Chaverneff, Vladimir et al,
THOMSON-CSF SCPI 173, Bld Haussmann
F-75379 Paris Cedex 08(FR)

(54) Procédé et dispositif d'identification et d'authentification à distance de documents.

(57) Pour authentifier un document, on le code (4) dans un organisme émetteur par inscription d'un code d'identification et d'un code d'authentification.

On lit (5) le document ainsi codé, on transforme le résultat de lecture en une suite logique, elle-même transformée en une suite codée (12) transmise à un organisme central (1) pour mémorisation. Le document est ensuite présenté à un organisme récepteur distant qui effectue les mêmes opérations de lecture et de transformation que l'organisme émetteur, et l'organisme central compare la suite codée qu'il en reçoit avec celle mémorisée.

FIG_1

# PROCEDE ET DISPOSITIF D'IDENTIFICATION ET D'AUTHENTIFICATION A DISTANCE DE DOCUMENTS

La présente invention se rapporte à un procédé et à un dispositif d'identification et d'authentification à distance de documents.

Lorsque l'on a à identifier et à authentifier rapidement un document établi par un tiers, on ne dispose généralement pas de moyens permettant d'y parvenir sans risque d'erreur. Un critère souvent utilisé est la signature de la personne ayant établi ce document, mais il est souvent difficile, sinon impossible, de détecter des signatures falsifiées. En outre, la reconnaissance de la signature ne garantit pas l'authenticité du contenu du document : certaines parties d'un document authentique à l'origine peuvent avoir été modifiés ultérieurement, alors que le reste du document est bien authentique. Dans certains cas, on peut transmettre par télécopie par exemple, la copie du document authentique original, mais encore faut-il que l'auteur du document puisse, dans le cas d'un document confidentiel, être en mesure de reconnaître l'identité de celui qui demande transmission de la copie, et être sûr que la transmission ne peut être captée par des tiers.

La présente invention a pour objet un procédé d'authentification et d'identification à distance de documents qui soit automatique et présente un très haut degré de sécurité, ainsi qu'un dispositif de mise en oeuvre de ce procédé.

Le procédé conforme à l'invention consiste à coder d'abord un document par l'impression sur ce dernier d'un code d'identification et d'une distribution spatiale aléatoire, d'un produit n'altérant pas la lisibilité de ce document, puis à "lire" à l'aide de moyens optoélectroniques le code d'identification et le contenu de ce document ainsi que l'impression de distribution spatiale aléatoire effectuée sur ce document, à analyser au moins une partie des caractéristiques intrinsèques du support de ce document, à transformer les résultats d'analyse et de lecture en une suite de signaux logiques elle-même ensuite transformée selon une loi de transformation pratiquement univoque en une séquence codée, à mémoriser en lieu sûr, cette séquence codée, puis, lors de l'identification et de l'authentification à distance de ce document, on le lit et on l'analyse de la même façon pour obtenir une suite de signaux logiques que l'on transforme selon la même loi de transformation en une séquence codée que l'on transmet audit lieu sûr où l'on effectue la transformation inverse, et l'on compare la suite de signaux logiques issue de cette transformation inverse à celle mémorisée.

Selon un aspect avantageux du procédé de l'invention, lors de la procédure d'authentification on transforme la suite de signaux logiques selon une première loi de transformation, pratiquement univoque, en une première séquence codée transitoire que l'on envoie audit lieu sûr, où elle est transformée, selon une seconde loi de transformation, pratiquement univoque, en une seconde séquence codée transitoire qui est renvoyée au lieu de lecture où elle est transformée selon une loi de combinaison logique, avec ladite suite de signaux logiques, la combinaison résultante étant transformée à l'aide de ladite première loi de transformation, en une troisième séquence codée qui est envoyée audit lieu sûr pour y être décodée selon des lois de transformation respectivement inverses des trois lois de transformation précitées, le résultat de la dernière transformation inverse étant comparé à la suite de signaux logiques mémorisée.

La présente invention sera mieux comprise à la lecture de la description détaillée d'un mode de réalisation pris comme exemple non limitatif et illustré par le dessin annexé, sur lequel :

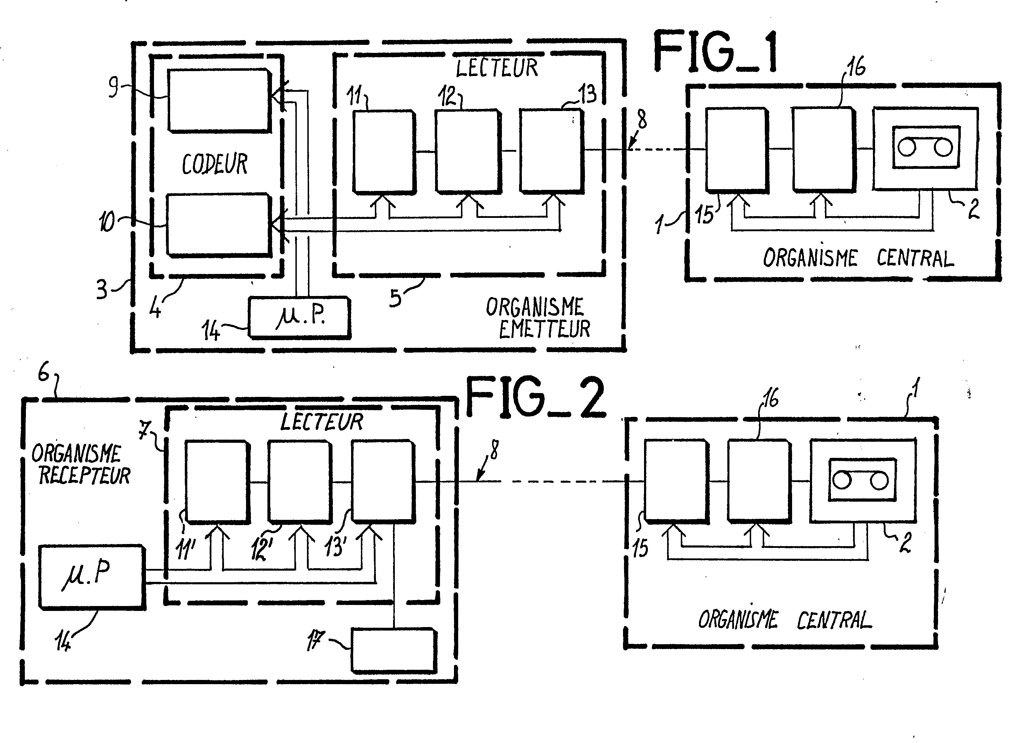

- les figures 1 et 2 sont des représentations très schématisées d'un système d'identification et d'authentification conforme à l'invention, lors du codage d'un document et lors de sa vérification, respectivement.

Le procédé de l'invention vise à authentifier rapidement et automatiquement un document tel qu'un original de contrat, un chèque, un acte notarié, un billet de banque ou de change, etc., ce avec un très haut degré de sécurité, l'identité du porteur de ce document n'entrant pas en ligne de compte, cette authentification pouvant être effectuée en un lieu (appelé par la suite organisme récepteur) différent et éloigné du lieu où il a été créé ou émis (appelé par la suite organisme émetteur). A cet effet, l'invention prévoit de mémoriser en un lieu sûr l'identité, codée ou non, ainsi qu'un code d'authentification de ce document. Par lieu sûr on entend un lieu (appelé par la suite organisme central) auquel un éventuel fraudeur ne peut pratiquement avoir accès et/ou comportant des moyens permettant de détecter une éventuelle intrusion frauduleuse et/ou comportant des moyens permettant de remédier à une telle intrusion (par exemple : avertissement immédiat à tous les organismes récepteurs concernés, ...) Il peut en être de même pour l'organisme émetteur.

Pour la mémorisation des données concernant l'identité et le code d'authentification des documents, l'organisme central 1 comporte un ordinateur 2, et pour la production et l'émission de ces données, l'organisme émetteur 3 comporte un codeur 4 et un lecteur-transmetteur 5 (voir figure 1).

Chaque organisme récepteur, tel que l'organisme 6, seul représenté sur la figure 2, comporte un lecteur-transmetteur similaire au lecteur 5. Selon une variante de l'invention (non représentée), l'organisme émetteur 3 peut également jouer le rôle d'un organisme récepteur pour des documents émis par lui-même ou par d'autres organismes émetteurs. Selon une autre variante, l'organisme émetteur peut faire partie de l'organisme central. La liaison entre l'organisme central et les organismes émetteurs, et récepteurs peut se faire par tous moyens de liaison appropriés 8 tels que câbles téléphoniques, par ondes hertziennes, par transmission radio ou par réseau spécialisé (telex, télégraphe, transmission de données du type Euronet, Transpac, etc.).

L'ordinateur 2 peut être un ordinateur classique pouvant mémoriser de façon non volatile un grand nombre de données et comportant des moyens de communication à distance avec les organismes émetteurs et récepteurs, comportant eux-mêmes des moyens de communication correspondants (modems par exemple). Comme précisé ci-dessus, cet ordinateur comporte des moyens appropriés en interdisant l'accès à des utilisateurs non autorisés, et éventuellement des moyens signalant des tentatives d'accès non autorisé, et tous autres moyens de sécurité appropriés.

Le codeur 4 de l'organisme émetteur 3 comporte essentiellement un dispositif 9 de marquage d'identification et un dispositif 10 de codage d'authentification. Le dispositif 9 est un dispositif permettant d'imprimer sur un document un code traduisible en signaux numériques, ce code comprenant des informations telles que : lieu et date du codage, numéro d'ordre chronologique, code "client" ou toute autre information, confidentielle ou non, permettant d'identifier facilement et sûrement le document en question. Ce code peut par exemple être un code à barres, de préférence inscrit à l'aide d'une encre invisible à l'oeil nu, mais détectable à l'aide d'un dispositif optoélectronique approprié.

Le dispositif 10 est un dispositif capable d'imprimer sur au moins une partie du document une distribution spatiale aléatoire d'informations. Ce dispositif est par exemple une imprimante à jet d'encre, cette encre étant également invisible à l'oeil nu, mais détectable à l'aide d'un dispositif optoélectronique approprié, par exemple sous rayonnement infrarouge.

Le lecteur 5 comporte un dispositif 11 de lecture automatique. Le dispositif 11 comporte des moyens optoélectroniques permettant de lire le code d'identification imprimé par le dispositif 9, et des moyens optoélectroniques capables de lire ladite distribution spatiale aléatoire, qui peuvent être les mêmes que les moyens optoélectroniques précités de lecture de code d'identification, et qui, bien entendu, lisent également le contenu du document (texte et éventuellement dessins, graphiques, photographies, etc.). L'emplacement du code d'identification peut servir de repère géométrique pour la lecture de la distribution spatiale aléatoire. Selon une caractéristique avantageuse de l'invention, le dispositif 11 comporte également des moyens capables d'analyser des caractéristiques intrinsèques d'au moins une partie du support de ce document, par exemple la texture du papier, ses "défauts", un éventuel filigrane, etc.

Le lecteur 5 comporte en outre un circuit 12 capable de transformer en une suite de signaux logiques les signaux produits par les moyens optoélectroniques et d'analyse du dispositif 11, ce circuit 12 étant également capable de transformer la suite de signaux logiques en une séquence codée, selon une loi de transformation pratiquement univoque (clé de codage). Cette transformation peut par exemple être produite par un générateur pseudo-aléatoire à rupture de séquence tel que décrit dans la demande de brevet français de la demanderesse déposée le même jour que la présente demande et ayant pour titre "générateur pseudo-aléatoire".

Le circuit 12 est relié à un circuit 13 de communication, tel qu'un modem, établissant, via la liaison informatique 8, la communication avec l'ordinateur 2 de l'organisme central 1. Une unité centrale à microprocesseur 14 supervise le fonctionnement de tous les éléments du codeur 4 et du lecteur 5.

L'organisme central 1 comporte un dispositif de transmission 15, similaire au dispositif 13, et relié à ce dernier par la liaison 8. Le dispositif 15 est relié à l'ordinateur 2 par un circuit 16 réalisant la transformation inverse de celle effectuée par le circuit 12, afin de restituer ladite suite de signaux logiques, caractéristique du document codé par le dispositif 4 et lu par le lecteur 5. Cette suite de signaux logiques est mémoriée dans la mémoire de masse de l'ordinateur 2, et constitue une information relative au document en question. Cette information comporte le code d'identification et le code d'authentification du document, le premier de ces codes constituant une sorte d'adresse à laquelle est mémorisé le second code. L'ordinateur 2 supervise le fonctionnement des dispositifs 15 et 16.

Chaque organisme récepteur, tel que l'organisme 6 représenté sur la figure 2, comporte un lecteur 7 identique au lecteur 5 de l'organisme émetteur, le lecteur 7 comportant les éléments 11', 12', 13' respectivement semblables aux éléments 11, 12, 13.

Lorsqu'un document, émis par un organisme émetteur, est présenté à un organisme récepteur, on l'introduit dans le lecteur 7, qui le traite exactement de la même façon que l'avait traité le lecteur 5 lors de l'émission du code d'identifiction et du code d'authentification. L'ordinateur 2 de l'organisme central reçoit alors l'information (codes d'identification et d'authentification), qu'il stocke provisoirement, relative au document présenté à l'organisme récepteur, le code d'identification lui permettant de retrouver dans sa mémoire de masse le code d'authentification concernant le document en question, à condition, bien entendu, que ce code d'identification ait été préalablement mémorisé dans l'ordinateur 2. Lorsque le code d'authentification mémorisé est trouvé, l'ordinateur le compare au code d'authentification qui vient de lui être transmis. Le résultat de la comparaison est transmis à l'organisme récepteur en question. Dans cet organisme récepteur, un dispositif 17, relié au circuit 13', reçoit ce résultat pour le visualiser et, en cas de résultat négatif, déclencher une alarme et/ou invalider ou détruire le document, par exemple. Pour plus de sécurité, si le résultat de la comparaison est négatif l'organisme récepteur peut renvoyer à l'organisme émetteur et/ou à l'organisme central un accusé de réception codé.

Le système décrit ci-dessus n'est pas à l'abri d'éventuels fraudeurs possédant le document original et un lecteur, et qui peuvent donc accéder facilement à la clé de codage. La fraude peut s'exercer soit sur le document lui-même, soit sur la transmission des codes ou du résultat de l'authentification, soit enfin sur l'ordinateur central, en particulier sur sa banque de données.

La copie ou la modification frauduleuse d'un document ne peut être authentifiée par l'ordinateur de l'organisme central que si l'on peut reproduire exactement la distribution spatiale aléatoire d'encre invisible à l'oeil nu, ainsi que la distribution spatiale aléatoire correspondant auxdites caractéristiques intrinsèques du support du document, cette dernière étant pratiquement impossible à reproduire dans le cas d'une copie frauduleuse ou à rétablir lors d'une modification frauduleuse d'un document. Par contre, les autres genres de fraude énumérés ci-dessus (fraude informatique) sont moins improbables, tout au moins pour des fraudeurs très audacieux et hautement spécialisés, ce qui en limite la probabilité.

Pour éliminer pratiquement tout risque de fraude informatique, la présente invention prévoit, selon une variante, à partir de la suite de signaux logiques, obtenue de la façon décrite ci-dessus, de produire dans l'organisme récepteur une première séquence codée transitoire, transmise de la façon décrite ci-dessus, à l'organisme central. Cette première séquence codée est produite, dans le circuit 12, selon une première loi de transformation pratiquement univoque, par exemple, comme mentionné ci-dessus, à l'aide d'un générateur pseudo-aléatoire à rupture de séquence. Dans l'organisme central, le circuit 16 reçoit cette première séquence codée transitoire et la transforme, selon une seconde loi de transformation pratiquement univoque, en une seconde séquence codée, également transitoire, qui est renvoyée à l'organisme récepteur. Dans l'organisme récepteur, le circuit 12' reçoit cette seconde séquence codée, puis effectue une combinaison logique entre cette seconde séquence codée et ladite suite de signaux logiques, qui a été préalablement mémorisée. Au lieu de mémoriser la suite de signaux logiques, on peut la re-créer en relisant le document à l'aide du dispositif 11'. Ladite combinaison logique peut être une simple fonction "ET" ou "OU", mais peut aussi être une fonction plus complexe que l'homme de l'art peut facilement mettre en oeuvre. Selon une variante perfectionnée, le circuit 12' peut mettre en oeuvre différentes combinaisons logiques, l'une d'entre elles étant sélectionnée, parmi un grand nombre de combinaisons, grâce à un mot de code introduit par l'ordinateur de l'organisme central à un endoit déterminé de ladite seconde séquence codée, par exemple au début ou à la fin de cette séquence codée. Ce mot de code, choisi aléatoirement de préférence, peut, par exemple indiquer au circuit 12' de choisir dans ladite suite de signaux logiques un certain nombre $n$ d'éléments binaires consécutifs, à un endroit déterminé, la valeur de ces n éléments binaires déterminant le numéro de la combinaison à sélectionner, ce qui suppose, bien entendu, que l'on dispose de $2^n$ combinaisons logiques.

A partir de la combinaison logique entre la suite de signaux logiques (produite par le dispositif 11) et la seconde séquence codée, le circuit 12 produit une troisième séquence codée, en utilisant ladite première loi de transformation. Cette troisième séquence codée est transmise, de la même façon que la première, à l'organisme central. Dans l'organisme central, le circuit 16 effectue les transformations inverses de celles réalisées lors de la création des séquences codées, ce qui permet de ré-obtenir ladite suite de signaux logiques.

A partir de cette suite, l'ordinateur 2 procède comme précédemment : il identifie le document en question, trouve le code d'authentification correspondant mémorisé et effectue la comparaison entre ce dernier et le code d'authentification qu'il vient de recevoir (à partir de la troisième séquence codée). Dans le cas de la sus-dite variante perfectionnée, l'ordinateur 2 retrouve, à partir de la première séquence codée transitoire, les codes mémorisés du document en question, ce qui lui permet de savoir quelle combinaison logique il a choisie lors de l'émission de ladite seconde séquence codée transitoire, et donc de pouvoir indiquer au circuit 16 comment décoder la troisième séquence codée.

Bien entendu, pour cette variante de l'invention, l'organisme récepteur et l'organisme central sont modifiés en conséquence, d'une façon évidente pour l'homme de l'art à la lecture de la description ci-dessus. Les séquences codées transitoires ne sont pas mémorisées à long terme, mais peuvent être mémorisées seulement pendant la procédure d'authentification, dans un but de vérification, en cas de mauvaise transmission de signaux par exemple. La procédure d'authentification peut recommencer si la transmission des signaux est trop mauvaise ou si le résultat de l'authentification est négatif. Toutefois, dans ce dernier cas, des précautions supplémentaires peuvent être prises : changement des lois de transformation, changement de la combinaison logique, choix d'une zone déterminée d'analyse des caractéristiques intrinsèques du document (le dispositif 11 étant commandé en conséquence), par exemple.

Bien entendu, lors de la comparaison des codes d'authentification mémorisé et reçu, on tient compte d'un certain taux d'erreur qui est déterminé expérimentalement en fonction des conditions de transmission et de la précision d'analyse des caractéristiques intrinsèques des supports des documents.

Pour garantir les meilleures conditions de sécurité, en particulier dans le cas de la variante décrite ci-dessus, les temps alloués à l'organisme récepteur pour les différentes phases du processus d'authentification sont limités à la valeur juste nécessaire, pour éviter que d'éventuels fraudeurs aient le temps d'essayer différentes combinaisons en cas d'insuccès.

Pour éviter la fraude informatique lors de l'envoi par l'organisme central à l'organisme récepteur du résultat de la comparaison (branchement frauduleux sur les lignes de transmission), l'ordinateur de l'organisme central peut, à partir du code d'identification relatif au document présenté à l'organisme récepteur, retrouver le code d'authentification correspondant, s'il existe (dans le cas contraire il peut rester muet ou envoyer une alarme codée au lieu de la seconde séquence codée), en extraire, à un endroit déterminé aléatoirement, une suite de longueur donnée, combiner logiquement cette suite avec un mot de code signifiant que le résultat de la comparaison est positif ou négatif, envoyer le résultat de la combinaison (éventuellement transformé selon ladite seconde loi de transformation) à l'organisme récepteur avec une information (éventuellement codée et/ou transformée selon cette seconde loi de transformation) indiquant l'endroit du code d'authentification d'où a été extraite ladite suite de longueur donnée. L'organisme récepteur retrouve, à l'aide de cette information, la suite de longueur donnée dans le code d'authentification du document qui lui est soumis, et peut ainsi restituer ledit mot de code en effectuant en sens inverses les transformations opérées par l'organisme central. Ce mot de code n'a

10

de sens que si le document en question est bien l'original et s'il n'a pas été altéré. Cette procédure peut être suivie d'un envoi d'accusé de réception, et éventuellement suivie d'une procédure de confirmation ou de plusieurs, à chaque fois, avec des codes différents.

Par ailleurs, pour éviter les effets d'un branchement frauduleux sur la ligne de transmission, on peut par exemple soit utiliser des lignes de transmission différentes pour établir la liaison entre l'organisme récepteur et l'organisme central (par exemple une liaison directe et une liaison via un autre organisme récepteur ou un organisme émetteur), soit établir des liaisons radio-électriques (qui peuvent être captées, mais non interrompues).

On remarquera que la lecture du code d'identification du contenu du document et la lecture de la distribution spatiale aléatoire peuvent être simultanées (si le lecteur optoélectronique est compatible) ou consécutives si l'on utilise deux lecteurs différents. La lecture est généralement un balayage du type balayage de télévision.

11

R E V E N D I C A T I O N S

1. Procédé d'identification et d'authentification à distance de documents caractérisé par le fait que l'on code d'abord un document en inscrivant sur celui-ci un code d'identification, et en imprimant sur ce document une distribution spatiale aléatoire d'un produit n'altérant pas la lisibilité de ce document, que l'on "lit" à l'aide de moyens optoélectroniques le code d'identification, le contenu de ce document et la distribution spatiale aléatoire et que l'on analyse au moins une partie des caractéristiques intrinsèques du support du document, que l'on transforme les résultats d'analyse et de lecture en une suite de signaux logiques, elle-même ensuite transformée, selon une loi de transformation pratiquement univoque, en une séquence codée, que l'on mémorise en lieu sûr cette séquence codée, et par le fait que lors de l'identification et de l'authentification à distance de ce document, on le lit et on l'analyse de la même façon que précédemment pour obtenir une suite de signaux logiques que l'on transforme, selon la même loi de transformation, en une séquence codée que l'on transmet audit lieu sûr où l'on effectue la transformation inverse, et que l'on compare la suite de signaux logiques issue de cette transformation inverse à celle mémorisée, le résultat de la comparaison étant utilisé comme critère d'authentification.

2. Procédé selon la revendication 1, caractérisé par le fait que lors de la procédure d'authentification d'un document, après l'avoir lu et analysé, on transforme ladite suite de signaux logiques, selon une première loi de transformation pratiquement univoque, en une première séquence codée transitoire que l'on envoie audit lieu sûr, où elle est transformée, selon une seconde loi de transformation, pratiquement univoque, en une seconde séquence codée transitoire qui est renvoyée au lieu de lecture où elle est transformée selon une loi de combinaison logique avec ladite suite de signaux logiques, la combinaison résultante étant transformée en une troisième séquence codée selon ladite première loi de transformation, cette troisième séquence codée étant transmise audit lieu sûr où elle est décodée selon des lois de transformation respectivement inverses des trois lois de transformation précitées, le résultat de la dernière transformation inverse étant comparé à ladite suite de signaux logiques mémorisée.

3. Procédé selon l'une quelconque des revendications 1 ou 2, caractérisé par le fait que les lois de transformation sont mises en oeuvre à l'aide de générateurs pseudo-aléatoires à rupture de séquence.

4. Procédé selon l'une quelconque des revendications précédentes, caractérisé par le fait que la distribution spatiale aléatoire est réalisée à l'aide d'une imprimante à jet d'encre, cette encre étant une encre invisible à l'oeil nu mais visible sous rayonnement infrarouge par des détecteurs optoélectroniques appropriés.

5. Procédé selon l'une quelconque des revendications précédentes, caractérisé par le fait que le code d'identification est imprimé à l'aide d'une encre invisible à l'oeil nu, mais visible sous rayonnement infrarouge par des détecteurs optoélectroniques appropriés.

6. Procédé selon la revendication 5, caractérisé par le fait que le code d'identification est un code à barres, et que son emplacement par rapport au document sur lequel il est imprimé sert de repère géométrique lors de la lecture par des moyens optoélectroniques de ce document.

7. Procédé selon l'une quelconque des revendications 2 à 6, caractérisé par le fait que ladite loi de combinaison logique est choisie parmi un grand nombre de lois de combinaison disponibles à l'aide d'un mot de code émis depuis ledit lieu sûr, ce mot de code désignant une partie de ladite suite de signaux logiques dont la valeur correspond au numéro d'ordre de la loi de combinaison choisie dans ledit grand nombre de lois de combinaison disponibles.

8. Dispositif d'identification et d'authentification à distance de documents, caractérisé par le fait qu'il comprend un organisme émetteur (3), comportant un codeur (4) et un lecteur (5) de documents, relié par une liaison informatique (8) à un organisme central (1) disposé en lieu sûr et comportant un ordinateur à mémoire de masse (2) et des moyens de décodage (16), cet organisme central étant relié par liaison informatique (8) à un ou plusieurs organismes récepteurs (6) se trouvant à grande distance de l'organisme central, chaque organisme récepteur comportant un lecteur (7) identique à celui de l'organisme émetteur.

9. Dispositif selon la revendication 8, caractérisé par le fait que le codeur (4) comporte un dispositif (9) d'impression de code d'identification et un dispositif (10) d'impression de distribution spatiale aléatoire, par le fait que le lecteur (5) comporte un dispositif de lecture automatique (11) comprenant des moyens optoélectroniques capables de lire le code d'identification, des moyens optoélectroniques capables de lire la distribution spatiale aléatoire et le contenu du document, un dispositif (12) capable de transformer en une suite de signaux logiques les signaux produits par les moyens du dispositif de lecture automatique, et capable de transformer la suite de signaux logiques en une séquence codée selon une loi de transformation univoque, et un dispositif (13) de transmission de signaux sur liaison informatique, l'ensemble des éléments de l'organisme émetteur étant supervisé par un microprocesseur (14), et par le fait que l'organisme central comporte un dispositif de transmission de signaux (15) sur liaison informatique, un dispositif (16) réalisant la transformation inverse de celle réalisée dans le lecteur de l'organisme émetteur, et un ordinateur (2) à mémoire de masse, supervisant le fonctionnement de l'ensemble des éléments de l'organisme central.

10. Dispositif selon la revendication 9, caractérisé par le fait que le lecteur (5, 7) comporte des moyens (11) capables d'analyser des caractéristiques intrinsèques d'au moins une partie du support d'un document.

11. Dispositif selon l'une quelconque des revendications 8 à 10, caractérisé par le fait que le lecteur (5, 7) comporte des moyens capables de mettre en oeuvre au moins une loi de combinaison logique entre une séquence codée qu'il reçoit et la suite de signaux logiques produite à partir du document qu'il lit, et par le fait que l'organisme central comporte des moyens capables de transformer, selon une loi de transformation pratiquement univoque, une séquence codée en une autre séquence codée.

12. Dispositif selon l'une quelconque des revendications 8 à 11, caractérisé par le fait que l'organisation récepteur comporte un dispositif d'affichage de résultat de comparaison effectuée par l'organisme central et/ou des moyens d'alarme et/ou des moyens de marquage ou de destruction de document activés lorsque le résultat de la comparaison est négatif.

**FIG_1**

CODEUR

LECTEUR

ORGANISME EMETTEUR

ORGANISME CENTRAL

μ.P.

**FIG_2**

ORGANISME RECEPTEUR

LECTEUR

ORGANISME CENTRAL

μ.P

Office européen
des brevets

**RAPPORT DE RECHERCHE EUROPEENNE**

0161181
Numéro de la demande

EP 85 40 0758

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 316 666 (ADRESSOGRAH MULTIGRAPH) <br> * Figures 1-4; page 2, ligne 36 - page 5, ligne 2; page 8, ligne 4 - page 9, ligne 5 * | 1,8,12 | G 07 F 7/08 <br> G 07 D 7/00 |
| A | | 5,6,9 | |
| Y | WO-A-8 200 062 (LIGHT SIGNATURES) <br> * Abrégé; figures 8,9; page 22, ligne 10 - page 30, ligne 22; page 2, ligne 25 - page 5, ligne 15 * | 1,8,12 | |
| A | | 4-7,9, 10 | **DOMAINES TECHNIQUES RECHERCHES (Int. Cl.4)** |
| X,P | FR-A-2 534 712 (TRAITEMENT DE L'INFORMATION) <br> * Abrégé; revendications; page 2, ligne 2 - page 5, ligne 9 * | 1 | G 07 F <br> G 07 D <br> G 06 K <br> H 04 L <br> G 07 C |
| A | | 8,9,12 | |
| A | EP-A-0 089 087 (PHILIPS) <br> * Abrégé; figure 1; revendication 1 * | 2,3,11 | |

--- -/-

Le présent rapport de recherche a été établi pour toutes les revendications

| Lieu de la recherche <br> LA HAYE | Date d'achèvement de la recherche <br> 12-07-1985 | Examinateur <br> DAVID J.Y.H. |
|---|---|---|

**Office européen des brevets**

**RAPPORT DE RECHERCHE EUROPEENNE**

0161181
Numéro de la demande

EP 85 40 0758

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | THE RADIO AND ELECTRONIC ENGINEER, vol. 51, no. 5, mai 1981, pages 236-240, Londres, GB; J.S.T. CHARTERS et al.: "Structured magnetic media for data security" * Page 238, colonne de droite, paragraphe 4, "Use of watermark tape" * | 1,8,12 | |
| | --- | | |
| A | WO-A-8 201 778 (H. STOCKBURGER) | | |
| | --- | | |
| A | FR-A-2 406 254 (J.M. GARDEY) | | |
| | ----- | | |

DOMAINES TECHNIQUES RECHERCHES (Int. Cl.4)

Le présent rapport de recherche a été établi pour toutes les revendications

| Lieu de la recherche LA HAYE | Date d'achèvement de la recherche 12-07-1985 | Examinateur DAVID J.Y.H. |
|---|---|---|